# EUROPÄISCHE PATENTSCHRIFT

(11) **EP 3 128 946 B1**
(45) Veröffentlichungstag und Bekanntmachung des Hinweises auf die Patenterteilung: **01.08.2018**
(21) Anmeldenummer: 15718769.1
(22) Anmeldetag: 08.04.2015
(51) Int. Cl.: A61C 13/00, B22F 3/04, B22F 3/10, B22F 3/22, B22F 1/00

(54) **VERFAHREN ZUR HERSTELLUNG EINES FORMROHLINGS AUS METALLPULVER**
METHOD FOR THE PRODUCTION OF A MOLDED BLANK FROM METAL POWDER
PROCEDE DE FABRICATION D'UNE EBAUCHE MOULEE EN POUDRE METALLIQUE

(30) Priorität: 11.04.2014 AT 2712014
(43) Veröffentlichungstag der Anmeldung: 15.02.2017
(73) Patentinhaber: STEGER, Heinrich, 39031 Bruneck (IT)
(72) Erfinder: STEGER, Heinrich, 39031 Bruneck (IT)
(74) Vertreter: Torggler & Hofinger Patentanwälte
(86) Internationale Anmeldenummer: PCT/EP2015/000741
(87) Internationale Veröffentlichungsnummer: WO 2015/154872

(56) Entgegenhaltungen:
- WO-A1-2011/023490
- CN-A- 101 279 106
- CN-A- 101 518 820
- US-A- 5 966 582
- LI Y ET AL: "Gelcasting of metal powders in nontoxic cellulose ethers system", JOURNAL OF MATERIALS PROCESSING TECHNOLOGY, ELSEVIER, NL, Bd. 208, Nr. 1-3, 21. November 2008 (2008-11-21), Seiten 457-462, XP025469050, ISSN: 0924-0136, DOI: 10.1016/J.JMATPROTEC.2008.01.009 [gefunden am 2008-01-17] in der Anmeldung erwähnt

## Beschreibung

Die Erfindung betrifft ein Verfahren zur Herstellung eines Formrohlings aus Metallpulver. Zudem betrifft die Erfindung einen Formrohling, der in einem solchen Verfahren hergestellt wurde sowie die Verwendung dieses Formrohlings zur Herstellung eines Zahnersatzes.

Gattungsfremde Herstellungsverfahren zur Herstellung von irgendwelchen Formrohlingen aus Keramik bzw. Keramikpulver sind bereits bekannt. Ein Beispiel für ein Herstellungsverfahren eines Keramikformlings auf Basis eines sogenannten Gel-Casting-Prozesses geht aus der CN 202213028 U hervor. Auch die US 6,354,836 B1 zeigt eine derartige Möglichkeit. Die Herstellung eines ferroelektrischen keramischen Rohlings geht beispielsweise aus der CN 101870581 A hervor. Eine Methode zur Herstellung von keramischen Schleifkugeln zeigt die CN 101857443 A. Auch die EP 1 552 913 A1 zeigt die Herstellung eines keramischen Rohlings. Auf Basis von Keramikpulver hergestellte Tintenstrahldruckköpfe gehen aus der US 6,065,195 hervor. Aus der US 6,083,452 geht die Herstellung einer Radarhaube auf Basis eines Gel-Casting-Prozesses mit Keramikpulver hervor.

In gattungsgemäßen metallbasierten Herstellungsverfahren hergestellte, weiterverarbeitbare metallische Formrohlinge werden in den unterschiedlichsten industriellen Bereichen benötigt. Ein Beispiel hierfür ist die Dentaltechnik (Zahnersatzteilherstellung), bei der neben Keramikrohlingen in letzter Zeit auch immer häufiger Formrohlinge auf Metallbasis verarbeitet werden. Um weiterverarbeitbare metallische Formrohlinge herzustellen, gibt es bereits seit Jahren verschiedenste Herstellungsverfahren.

Ein derartiges Herstellungsverfahren ist das sogenannte Trockenpressen. Hierzu werden ein Metallpulver und ein Bindemittel ohne Wasser vermischt und unter mechanischem Druck (Pressdruck) zu einem Grünling verdichtet. Ein Beispiel für eine solche Herstellungsmethode zeigt die EP 2 450 003 A2. Nachteilig bei diesem Trockenpressen ist, dass nicht beliebig feine Pulver verwendet werden können, da bei feinerem Pulver eine viel größere Presskraft aufgebracht werden müsste. Dadurch sind feine und glatte Oberflächen schwierig und wenn dann nur sehr aufwändig herstellbar.

Demgegenüber gibt es auch noch Nassformgebungsverfahren. Ein Beispiel dafür ist das sogenannte slip casting. Dabei wird ein Metallpulver mit einer Flüssigkeit zu einem Schlicker vermischt und in eine flüssigkeitsabsorbierende bzw. saugfähige Form (z. B aus Gips) gegossen. Durch diese Form wird dem Schlicker Suspensionsflüssigkeit entzogen, bis ein mechanisch stabiler Rohling entsteht, welcher anschließend zu einem Zahnteil gefräst und sauerstofffrei gesintert wird. Ein entsprechendes Verfahren ist in der EP 2 470 113 B1 beschrieben. Nachteilig bei diesem Verfahren ist, dass sich die verkauften Teile bei Berührung mit Wasser verflüssigen, da sich noch Binder in den Rohlingen befindet. Zudem ist beim später folgenden Sintern ein relativ großer Schwund gegeben. Weiters haben die so produzierten Formrohlinge eine inhomogene Dichteverteilung aufgrund eventuell entstandener Lunker oder Einschlüsse.

Bei dem ebenfalls aus dem Stand der Technik Metallpulverspritzgussverfahren ist nachteilig, dass die dadurch hergestellten Formrohlinge mit einer Wanddicke von maximal 15 mm begrenzt sind, vor allem da ein verwendeter Binder bei größerer Wanddicke nicht mehr entweichen kann.

Deswegen betrifft die Erfindung ein sogenanntes Gelcasting-Verfahren, bei dem eine Ausgangsmischung für das Gelcasting durch Vermengen des Metallpulvers mit einer Flüssigkeit und einem Binder erzeugt wird.

Beispiele für diverse Methoden des Gelcasting gehen aus der WO 2007/008828 A2, der CN 1594196 A und der US 7,655,586 B1 hervor. Weitere Informationen zu Gelcasting auf Metallbasis finden sich in den Artikeln "Gelcasting of metal powders in nontoxic cellulose ethers system", Journal of materials processing technology 208 (2008), Seiten 457 bis 462 und in "Colloidal Shaping of Alumina Ceramics by Thermally Induced Gelation of Methylcellulose", Journal of the American Society - Hareesh et al., Vol. 94, No. 3, Seiten 749 bis 753.

Nachteilig bei diesen bekannten Gelcasting-Verfahren ist, dass der hergestellte Formrohling oftmals nicht homogen ist, wodurch er selbst nach einem mechanischen Bearbeiten eine unregelmäßige Oberfläche aufweisen kann. Diese Inhomogenität ist vor allem bei hochpräzisen und optisch anspruchsvollen Zahnersatzteilen unerwünscht.

In der CN 101518820 A geht es um ein Verfahren zur Herstellung eines Formrohlings aus Metallpulver durch Gelcasting, wobei ein Schlicker (slurry) unter Vakuum entgast wird.

Die Aufgabe der vorliegenden Erfindung besteht daher darin, ein gegenüber dem Stand der Technik verbessertes Verfahren und einen verbesserten Formrohling zu schaffen. Insbesondere sollen die beim Stand der Technik gegebenen Nachteile behoben werden. Das heißt, der Formrohling soll möglichst homogen sein.

Dies wird für ein Verfahren mit den Merkmalen von Anspruch 1 gelöst. Vorteilhafte Ausführungsvarianten der vorliegenden Erfindung sind in den Unteransprüchen angeführt.

Sämtliche Einzelheiten, Vorteile und Ausführungsvarianten gemäß der Unteransprüche der vorliegenden Erfindung werden anhand der Figurenbeschreibung unter Bezugnahme auf die in den Zeichnungen dargstellten Ausführungsbeispiele im Folgenden näher erläutert. Darin zeigen:
- Fig. 1: schematisch das gesamte Verfahren zum Herstellen eines Formrohlings und eines Zahnersatzes,
- Fig. 2 bis 4: schematische Nahaufnahmen des gelverfestigten Grünkörpers, des getrockneten Grünkörpers und des Vorsinterkörpers,
- Fig. 5 bis 8: diverse Ansichten der geschlossenen Form und
- Fig. 9 und 10: zwei Ansichten des fertiggestellten Formrohlings.

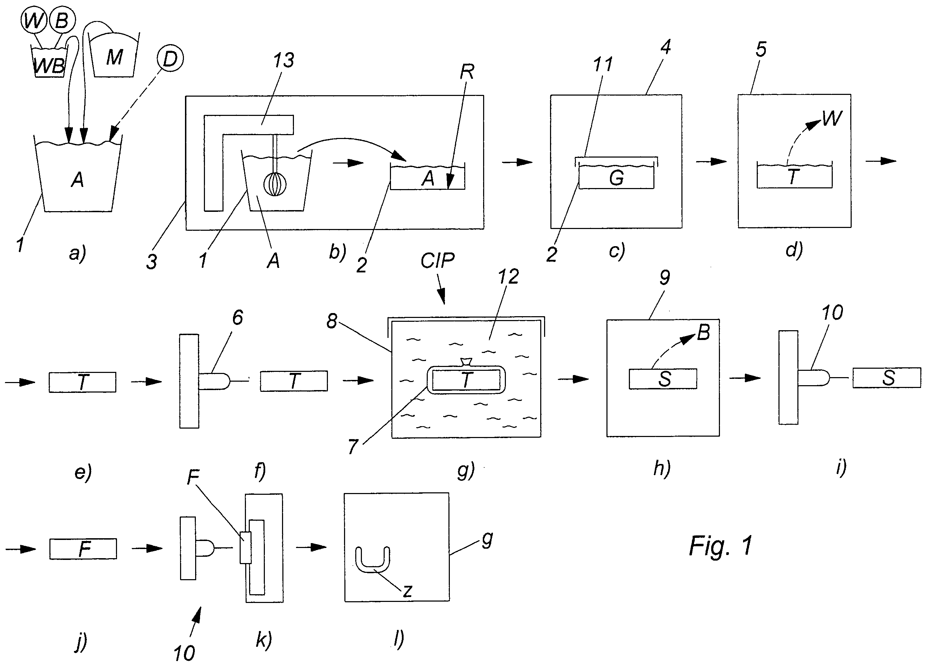

In Fig. 1 sind von links oben bis rechts unten die bevorzugten Verfahrensschritte a bis j zur Herstellung eines Formrohlings F schematisch dargestellt. Unten in der Mitte sind noch die abschließenden Bearbeitungsschritte k und I zur Herstellung eines Zahnersatzes Z aus dem Formrohling F schematisch dargestellt.

Im Verfahrensschritt a wird der Binder B mit der Flüssigkeit W in einem Behältnis (zum Beispiel in einem Eimer) zu einer Flüssigkeit-Binder-Mischung WB vermengt, bevor diese Flüssigkeit-Binder-Mischung WB mit dem Metallpulver M (auch Dentalmetall genannt) in einem Behältnis 1 zur Ausgangsmischung A vermengt wird. Gegebenfalls kann diese Vermengung bereits unter Vakuum erfolgen. Grundsätzlich können im Verfahrensschritt a die Vermengungsschritte der Flüssigkeit W, des Binders B und des Metallpulvers M in beliebiger Reihenfolge oder auch gleichzeitig erfolgen. Bevorzugt ist allerdings vorgesehen, dass die vermengte Flüssigkeit-Wasser-Mischung WB in einem darauf folgenden Schritt mit dem Metallpulver M vermengt wird. Die Vermengung kann durch eine Rührvorrichtung mit einer ausreichend hohen Drehzahl durchgeführt werden, dass eine Klumpenbildung vermieden wird.

Bezüglich der Mischungsverhältnisse von Flüssigkeit W zu Binder B kann allgemein fesgehalten werden, dass Binder B der Flüssigkeit W maximal bis zur Löslichkeitsgrenze zugegeben werden kann. Bevorzugt ist aber vorgesehen, dass das Gewichtsprozentverhältnis von Flüssigkeit W zu Binder B in der Ausgangsmischung zwischen 95 zu 5 und 99,9 zu 0,1 liegt. Wenn der Binderanteil höher als 5 % ist, kann der Binder B meist - je nach Löslichkeitsgrenze - nicht mehr ausreichend in der Flüssigkeit W gelöst werden. Wenn dagegen der Binderanteil unter 0,1 % liegt, kann beim Gelcasting keine ausreichende Gelbildung und somit keine ausreichende Grünfestigkeit mehr erreicht werden. Bevorzugt liegt der Binderanteil zwischen 1 Gew.-% und 3 Gew.-%. Besonders bevorzugt liegt dieser Binderanteil an der Flüssigkeit-Binder-Mischung WB bei 2 Gew.-%. Als Flüssigkeit W können prinzipiell Alkohole verwendet werden. Vorteilhaft wird als Flüssigkeit W Wasser, insbesondere destilliertes Wasser, verwendet. Dieses Wasser kann die Temperatur von Leitungswasser - also bevorzugt zwischen 8° C und 18° C - aufweisen.

Zum Mischungsverhältnis der Ausgangsmischung A ist bevorzugt vorgesehen, dass das Gewichtprozentverhältnis von Flüssigkeit W und Binder B zu Metallpulver M zwischen 5 zu 95 und 20 zu 80 liegt. Je feiner das verwendete Metallpulver M ist desto größer ist die Oberfläche und desto mehr Flüssigkeit W wird zur Benetzung dieser Oberfläche benötigt. Wenn der Flüssigkeitsanteil unter 5 Gew.-% liegt, wird die Viskosität der Ausgangsmischung A zu hoch. Dadurch ist der Schlicker bzw. die Ausgangsmischung A nicht mehr gießfähig, die Lufteinschlüsse können kaum mehr austreten und ein Umrühren ist kaum bzw. nicht mehr möglich. Wenn der Flüssigkeitsanteil über 20 Gew.-% liegt, ist bei der später folgenden Trocknung die Schwindung zu groß, die Gründichte sinkt (Nachteil bei Weiterverarbeitung) und die Grünfestigkeit kann zu niedrig werden. Bevorzugt weist die Flüssigkeit-Binder-Mischung WB einen Gewichtsprozentanteil an der Ausgangsmischung A zwischen 7,5 und 15 auf. Besonders bevorzugt liegt dieser Gewichtsprozentanteil bei 10.

Um die Mischbarkeit des Metallpulvers M mit der Flüssigkeit-Binder-Mischung WB zu verbessern, kann der gesamten Ausgangsmischung A, dem Metallpulver M oder der Flüssigkeit-Binder-Mischung WB ein Verflüssigungsmittel, vorzugsweise ein Dispergator D (Netzmittel), zugefügt bzw. beigemengt werden. Dadurch wird die Oberfläche des Metallpulvers M besser mit der Flüssigkeit W benetzt. Vor allem wird durch den Dispergator D die Oberflächenspannung der Flüssigkeit W verändert. Als Dispergator D kann ein organisches alkalifreies Verflüssigungsmittel verwendet werden. Beispielhaft kann als Dispergator D das Mittel mit der Produktbezeichnung DOLAPIX CE64 verwendet werden.

Der nachfolgende Verfahrensschritt b zeigt das Durchmischen der Ausgangsmischung A und das Eingießen dieser Ausgangsmischung A in eine Form 2. Zumindest das Durchmischen erfolgt erfindungsgemäß unter Vakuum. Auch das Eingießen erfolgt bevorzugt unter Vakuum.

Beim Gelcasting ist die Ausgangsmischung A relativ hochviskos. Aus dieser hochviskosen Ausgangsmischung A können beim oder durch das Vermengen entstandene Luftblasen schlecht austreten, wodurch im Endeffekt ein inhomogener Formrohling F entstehen würde.

Erfindungsgemäß erfolgt deshalb eine Durchmischung der Ausgangsmischung A unter Vakuum. Dadurch werden Lufteinschlüsse in der Ausgangsmischung A großteils vermieden. Vor allem die größeren Luftblasen können entweichen. Kleinere Luftblasen stören kaum. Knapp unterhalb der schneller erhärtenden Oberfläche können Luftblasen verbleiben, die aber später problemlos spanend abgetragen werden können.

Besonders bevorzugt ist im Verfahrensschritt b vorgesehen, dass das Vermischen unter Vakuum in einer Vakuumkammer 3 durchgeführt wird, wobei in der Vakuumkammer 3 ein Unterdruck, vorzugsweise zwischen 25 und 40 Millibar, herrscht. Besonders bevorzugt wird bei einer Meereshöhe von 840 m in der Vakuumkammer 3 ein Unterdruck von 30 Millibar erzeugt. Bei einem Unterdruck von 23 bis 24 Millibar würde bei dieser Meereshöhe das kalte Wasser im Vakuum bereits zu kochen beginnen. Natürlich kann auch vor der im Vakuum durchgeführten Durchmischung bereits eine intensive Durchmischung bzw. Durchwirbelung der Ausgangsmischung erfolgen. Vorteilhalft erfolgt dies aber nur bzw. hauptsächlich unter Vakuum, da dadurch die Lufteinschlüsse besser entweichen können. Die Durchmischung erfolgt bevorzugt durch eine zumindest teilweise in der Vakuumkammer 3 angeordnete Rührvorrichtung 13. Die Durchmischung kann aber auch durch Schütteln oder durch Vibrationen ausgelöst.

Anschließend wird im Verfahrensschritt b die gut durchmischte Ausgangsmischung A in eine Form 2 eingegossen. Bevorzugt erfolgt dieses Eingießen auch unter Vakuum. Dazu kann in der Vakuumkammer 3 eine nicht dargestellte mechanische Vorrichtung zum Eingießen der Ausgangsmischung A in die Form 2 angeordnet sein. Diese Form 2 ist bevorzugt aus Metall hergestellt. Sie kann an sich eine beliebige Geometrie aufweisen. Bevorzugt ist die Form 2 schalenförmig und bildet ein kreiszylindrischen Innenraum bzw. Hohlraum aus. Wie in Verfahrensschritt b angedeutet, kann diese Form 2 vor dem Einbringen der Ausgangsmischung A mit einem Trennmittel R bestrichen werden, sodass an der Formoberfläche möglichst kein Material anhaften kann. Dieses Trennmittel R kann silikonbasiert sein. Es sollte nicht wasserlöslich sein. Als ein konkretes Beispiel für ein derartiges Trennmittel R kann ACMOSIL 36-6032 H angeführt werden.

Wie in Verfahrensschritt b angedeutet, kann diese Form 2 vor dem Einbringen der Ausgangsmischung A mit einem Trennmittel R bestrichen werden, sodass an der Formoberfläche möglichst kein Material anhaften kann. Dieses Trennmittel R kann silikonbasiert sein. Es sollte nicht wasserlöslich sein. Als ein konkretes Beispiel für ein derartiges Trennmittel R kann ACMOSIL 36-6032 H angeführt werden.

Für das beschriebene Gelcasting-Verfahren kann als Metallpulver M ein Pulver auf Basis von Kobalt, Chrom, Molybdän, Wolfram, Carbid, Beryllium, Inox, Titan, Aluminium, Kupfer, Zinn und ähnliche Metalle oder Mischungen daraus verwendet werden. Besonders bevorzugt wird als Metallpulver M eine Chrom-Kobalt-Legierung verwendet. Bevorzugte andere Legierungen können sein: Chrom-Kobalt-Molybdän, Chrom-Kobalt-Wolfram und Wolfram-Carbid. Das Metallpulver M kann bevorzugt eine Korngröße zwischen 3 µm und 50 µm aufweisen.

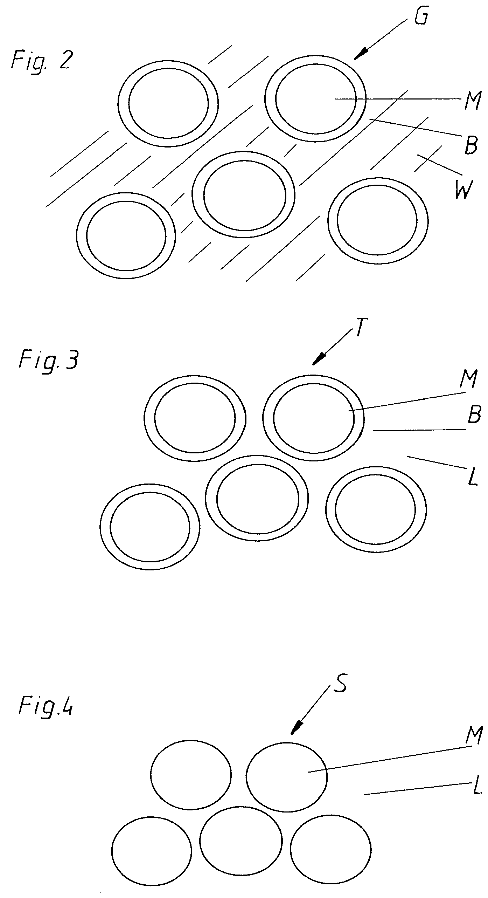

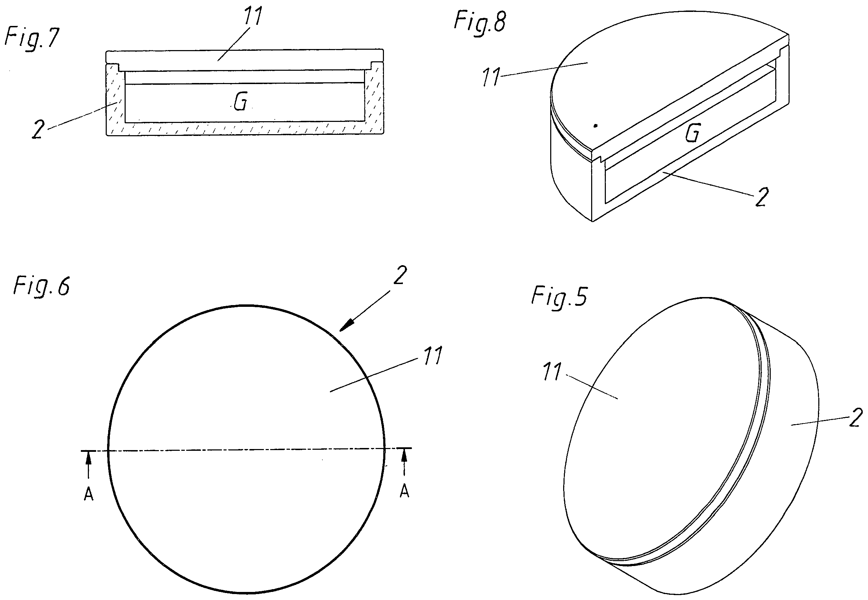

Nach dem Vermengen von Flüssigkeit W, Binder B und Metallpulver M zur Ausgangsmischung A, der Durchmischung der Ausgangsmischung A unter Vakuum und dem Eingießen dieser durchmischten Ausgangsmischung A in die Form 2 wird diese Ausgangsmischung A gemäß Verfahrensschritt c erwärmt, wodurch die Gelbildung in der Ausgangsmischung A einsetzt und die Ausgangsmischung A zu einem gelverfestigten Grünkörper G verfestigt wird. Grundsätzlich muss die Temperatur für das Gelcasting über dem Gelbildungsbereich des Binders B und unter der Siedetemperatur der Flüssigkeit W angesiedelt sein. Vorzugsweise erfolgt diese Erwärmung in einem Heizschrank 4. Besonders bevorzugt wird die Ausgangsmischung A für die Gelbildung im Heizschrank 4 für 20 Minuten bis 70 Minuten, vorzugsweise für 35 Minuten bis 55 Minuten, auf eine Temperatur zwischen 50° C und 95° C, vorzugsweise auf 60° C bis 85° C, erwärmt. Der ideale Zeitraum für eine gute und homogene Gelbildung hängt stark von der Teilegeometrie, von den Wandstärken, usw. ab. Je größer der Temperaturunterschied zwischen der Gelbildungtemperatur und der im Heizschrank 4 herrschenden Temperatur ist, desto schneller erfolgt die Gelbildung. Bevorzugt herrscht bei der Gelbildung im Heizschrank 4 eine Temperatur von 80° C. Die Gelbildung in der Ausgangsmischung A sollte für ein ideales Produkt möglichst ohne Flüssigkeitsverlust erfolgen. Deshalb ist bevorzugt vorgesehen, dass die Form 2 mit einem Deckel 11, vorzugsweise luftdicht, verschlossen ist (dazu sei auf die Fig. 5 bis 8 verwiesen). Dadurch wird eine zu früh einsetzende Trocknung vermieden. Es erfolgt also fast kein Flüssigkeitsentzug. Allenfalls eine geringe Menge Flüssigkeit W kondensiert am Deckel 11. In Fig. 2 ist dazu passend eine schematische Nahaufnahme des gelverfestigten Grünkörpers G dargestellt. Die Körner des Metallpulvers M werden demgemäß vom Binder B eingehüllt. Der restliche Raum ist mit der Flüssigkeit W gefüllt.

Bei einer ersten möglichen Gelcasting-Technik kann als Binder B ein Monomer mit einem Crosslinker verwendet werden, welche die Polymerisation (Gelbildung) auslösen. Dabei kann der Binder B einen Gewichtsprozentanteil von bis zu 15 % an der Flüssigkeit-Binder-Mischung WB aufweisen. Die Verfestigung kann bei dieser Technik aber schlecht kontrolliert werden, da eine Reaktion mit dem Monomer bereits mit der Zugabe des Crosslinkers beginnt. Es kann also bereits beim Gießen die Gelbildung beginnen, wodurch Gussfehler und Unregelmäßigkeiten auftreten können. Manche Monomere sind auch giftig und deshalb nicht verwendbar. Zudem ist bei Gelcasting mit Monomeren die Trocknung schwieriger, da die Gelbildung länger (mehrere Tage bis Wochen) erfolgen muss, weil ansonsten leicht Risse entstehen können. Dies ist darauf zurückzuführen, dass die Oberfläche schnell hart wird, wogegen der Kern lange weich bleibt.

Diese Nachteile werden bei einer bevorzugten Ausführungsform dadurch behoben, dass als Binder B Zellulose, vorzugsweise Methylzellulose, verwendet wird. Bei Zellulose als Binder B entstehen keine Risse. Die Ausgangsmischung A ist bei der Gelbildung nicht so spröde. Die Zellulose verfestigt sich ab einer Temperatur von ca. 50° C bis 60° C, wodurch die Gelbildung eintritt. Die Gelfestigkeit muss nicht von der Gelbildungstemperatur abhängen. Die Gelbildungstemperatur und die Gelfestigkeit hängen hauptsächlich vom verwendeten Binder B bzw. von der verwendeten Zellulose ab. Der Binder B besteht dabei vorzugsweise zu 100 % aus Methylzellulose.

Das Gewicht des gelverfestigten Grünkörpers G kann zwischen 0,5 kg und 5 kg, vorzugsweise zwischen 1 kg und 1,5 kg liegen. Dies kann aber je nach Form und Größe des am Ende herzustellenden Teils natürlich stark variieren. In der Dentaltechnik sind Teile bzw. Formrohlinge F in dem angegebenen Gewichtsbereich üblich. Prinzipiell können also Teile jeglicher Größe und Gewicht hergestellt werden.

Als nächstes wird der Verfahrensschritt d durchgeführt, bei dem der gelverfestigte Grünkörper G in einem Trockenschrank 5 für 10 bis 20 Stunden bei einer Temperatur zwischen 50° C und 95° C zu einem getrockneten Grünkörper T getrocknet wird. Grundsätzlich kann als Trockenschrank 5 auch der Heizschrank 4 verwendet werden. Der Trockenvorgang kann so erfolgen, dass nach der Gelbildung der Deckel 11 abgenommen und dadurch die Form 2 geöffnet wird. Theoretisch kann sofort eine Entformung erfolgen, da der gelverfestigte Grünkörper G bereits eine ausreichende Festigkeit aufweist. Es genügt für den Trockenvorgang aber, dass die Form 2 nur geöffnet wird, sodass eine Verdunstung der Flüssigkeit W einsetzen kann, wie sie im Verfahrensschritt d gemäß Fig. 1 zeichnerisch veranschaulicht ist. Bei diesem Trockenvorgang ist es für die Materialentwicklung günstig, wenn die Temperatur im Trockenschrank 5 unter dem Siedepunkt der Flüssigkeit W bleibt. Die Temperatur darf keinesfalls unter den Gelbildungsbereich fallen, da ansonsten wieder die Verflüssigung des Gels einsetzen würde. Ideal ist deshalb eine Temperatur von 90° C beim Trocknen des gelverfestigten Grünkörpers G zum getrockneten Grünkörper T. Bei dieser Temperatur ist der Vorteil einer schnellen Trocknung gegeben, dennoch ist die Temperatur noch weit genug vom Siedepunkt des Wassers entfernt. Durch diesen Trockenvorgang wird praktisch die gesamte Flüssigkeit W - bis auf die Restfeuchte aufgrund der Luftfeuchtigkeit - aus dem gelverfestigten Grünkörper G entfernt. In Fig. 3 ist schematisch eine Nahaufnahme des getrockneten Grünkörpers T dargestellt, aus der hervorgeht, dass der Binder B die Körner des Metallpulvers M umgibt bzw. benetzt. Der Raum zwischen den einzelnen Körnern ist aber durch die Trocknung nun mit Luft L gefüllt.

Anschließend wird der Verfahrensschritt e durchgeführt, bei dem der getrocknete Grünkörper T aus der Form 2 entnommen wird. Der Grünkörper G bzw. T ist bevorzugt scheibenförmig. Die Geometrie kann aber auch quadratisch sein. Auch kompliziertere Formen sind denkbar. Die Geometrie kann auch bereits an die herzustellenden Teile angepasst sein. Zum Beispiel kann der Grünkörper G bzw. T hufeisenförmig sein, um später Dentalbrücken bzw. Dentalstege herzustellen.

Gemäß dem nachfolgenden Verfahrensschritt f wird nach der Entformung die Oberfläche des getrockneten Grünkörpers T durch eine Bearbeitungsvorrichtung 6 spanend bearbeitet. Durch diese Bearbeitung werden offene Poren bzw. Unebenheiten aufgrund entstandener Blasen entfernt bzw. abgetragen. Eventuell entstandene Fehlstellen werden entfernt. Wenn die Oberfläche glatt genug ist, muss dieser Schritt nicht erfolgen. Die Oberfläche sollte jedenfalls so glatt sein, dass beim anschließenden Verfahrensschritt g beim CIP-Verfahren keine Beschädigung der zum Beispiel aus Nylon bestehenden Verpackung 7 auftritt. Dies ist der wesentliche Grund für den Verfahrensschritt f.

Somit ist auch bereits auf den nächsten Verfahrensschritt g verwiesen worden. Erfindungsgemäß ist vorgesehen, dass der getrocknete Grünkörper T in einem kalt-isostatischen Pressverfahren (CIP-Verfahren) verdichtet wird. Bei diesem Verfahren wird zunächst der getrocknete Grünkörper T in eine wasserdichte Verpackung 7 gegeben. Wenn Flüssigkeit 12 bzw. Wasser eindringen würde, könnte keine Verdichtung erfolgen. Vielmehr würde sich der eigentlich getrocknete Grünkörper T wieder teilweise verflüssigen bzw. mit Flüssigkeit W füllen. Zudem ist eine Verdichtung bei Wassereintritt nicht möglich, da ja nur die durch die Trocknung erzeugten luftgefüllten Hohlräume verdichten werden können. Der Vorteil dieses CIP-Verfahrens liegt bei einem geringeren Schwund beim abschließenden Endsintern des Formrohlings F. Konkret wird dafür der in der wasserdichten Verpackung 7 angeordnete, getrocknete Grünkörper T in einen mit Flüssigkeit gefüllten Stahl- bzw. Druckkessel 8 gegeben. Dieser Druckkessel 8 wird anschließend verschlossen. Über ein Ventil kann Luft entweichen, wenn der Druckkessel 8 mit der Flüssigkeit 12 (Wasser) bis oben hin vollgefüllt wird. Dann wird eine Hochdruckpumpe eingeschaltet und der Druckaufbau im Druckkessel 8 erfolgt. Der Druck muss dabei so hoch gewählt werden, dass der Binder B im getrockneten Grünkörper T gebrochen wird und somit eine Verdichtung erfolgt. Bevorzugt wird das CIP-Verfahren bei einem Druck von mindestens 1000 bar, vorzugsweise bei 2000 bis 5000 bar, für mindestens 10 Sekunden, vorzugsweise für 20 bis 40 Sekunden, durchgeführt wird. Im konkreten wird mit einem Druck von 4500 bar kalt-isostatisch gepresst. Dieser Verfahrensschritt g dient vor allem der Nachverdichtung. Dadurch erreicht der getrocknete Grünkörper T eine Gründichte von ca. 6 kg/l. Dies hängt allerdings ganz vom Druck und von den Eigenschaften ab, die gewünscht sind. Die theoretische Dichte eines bevorzugten Materials liegt bei 8,2 kg/l. Bei CIP-Verfahren mit 4500 bar wird eine Dichte von ca. 6,3 kg/l erreicht. Mindestens sollte eine Dichte von 50 % der theoretischen Dichte erreicht werden. Bei der bevorzugten Materialwahl wird bereits vor dem CIP-Verfahren eine Dichte von ca. 5 kg/l erreicht. Je feineres Metallpulver M verwendet wird, desto geringer ist die Dichte, da mehr Wasser verwendet werden müsste, wodurch mehr Hohlstellen gegeben wären. Feineres Pulver führt allerdings im Gegensatz wieder zu einer feineren Oberfläche des hergestellten Formrohling F, da ein Fräser ja immer gesamte Metallpulverkörner aus der Oberfläche löst und diese nicht teilt.

Nach dem kalt-isostatischen Pressen wird der Druckkessel 8 geöffnet, die Verpackung 7 samt getrocknetem Grünkörper T aus dem Druckkessel 8 entnommen und der getrocknete Grünkörper T wiederum aus der Verpackung 7 entnommen.

Danach wird der Verfahrensschritt h durchgeführt. Demgemäß wird der getrocknete Grünkörper T in einem Sinterofen 9 zu einem Vorsinterkörper S, vorzugsweise sauerstofffrei, gesintert. Dieser Vorgang bzw. Verfahrensschritt h kann in eine Entbinderung und in eine Vorsinterung aufgeteilt werden.

Beim Entbindern ist bevorzugt vorgesehen, dass die Temperatur im Sinterofen 9 in ca. 10 bis 20 Stunden auf 400° C bis 550° C ansteigt. Zunächst erfolgt beim Entbindern ein langsames Aufheizen, sodass der Binder B genügend Zeit hat zu entweichen (schematisch dargestellt in Fig. 1) bzw. zu verbrennen. Durch langsames Hochfahren der Temperatur auf 120° C bis auf 500° C - evt. mit Haltezeit bzw. an das Bindersystem angepasste Aufheizraten - entweicht bereits ein Gutteil des Binders B. Bei bestimmten Bindern B könnte bei bestimmter Temperatur der Druck im Teil zu schnell ansteigen, weswegen kurze Temperaturanstiegspausen vorgesehen sein können. Das heißt, es muss kein kontinuierlicher Temperaturanstieg erfolgen. Diese Entbinderung dauert insgesamt ca. 15. Stunden. Im Schnitt kann beim Entbindern eine Temperatursteigerungsrate von ca. 1° C pro Minute im Sinterofen 9 gefahren werden. Abschließend gibt es dann bei ca. 500° C eine Haltezeit von ca. einer Stunde.

Zu Beginn der anschließenden Vorsinterung gibt es bevorzugt eine Temperatursteigerungsrate von 2° C pro Minute von 500° C auf die gewünschte Endtemperatur. Dann verbleibt die Temperatur im Sinterofen 9 für 25 bis 180 Minuten in einem Bereich zwischen 650° C und 800° C. Die Temperatur hängt von der gewünschten Härte ab, wobei bevorzugt bei ca. 730° C vorgesintert wird. Bevorzugt wird diese Temperatur im Sinterofen 9 für ca. 40 Minuten konstant gehalten. Dies dient vor allem dazu, dass bei einer Vielzahl von im Sinterofen 9 angeordneten getrockneten Grünkörpern T alle dieselbe Vorsinterung erfahren.

Durch diesen Verfahrensschritt h wird aus dem getrockneten Grünkörper T der Vorsinterkörper S. In Fig. 4 ist dazu passend eine Nahaufnahme des Vorsinterkörpers S schematisch veranschaulicht, gemäß der der Binder B entwichen ist und der Vorsinterkörper im Wesentlichen nur mehr aus den Körnern des Metallpulvers M und der dazwischen befindlichen Luft L besteht. Ersichtlich ist auch die verdichtete Anordnung der einzelnen Körner des Metallpulvers M.

Zum grundsätzlichen Ablauf dieses Verfahrens sei angeführt, dass praktisch alle Angaben sehr variabel sind. Vor allem können die jeweiligen Werte bzw. Parameter je nach verwendeten Materialien sehr unterschiedlich sein.

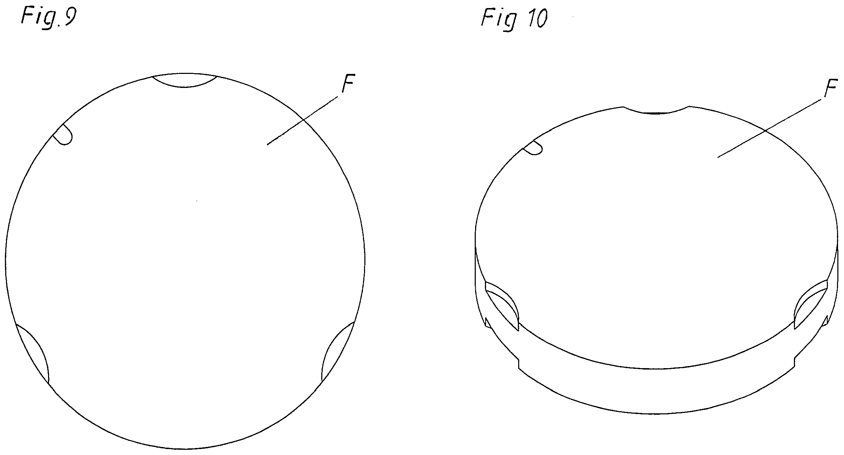

Abschließend erfolgt der Verfahrensschritt i, demgemäß in einer Bearbeitungsvorrichtung, vorzugsweise in einer CNC-Fräsvorrichtung 10 oder eine CAD/CAM-Maschine, der Vorsinterkörper S spanend bearbeitet wird. Dadurch entsteht aus dem Vorsinterkörper S der im Verfahrensschritt j veranschaulichte Formrohling F. Es erfolgt somit eine spanende Bearbeitung in die endgültige Rohlingform, so wie dieser dann verkauft wird. Die konkrete Geometrie dieses Formrohlings F ist in den Fig. 9 und 10 ersichtlich. Der Vorteil dieser Formrohlinge F gegenüber anderen Rohlingen liegt in der relativ hohen Festigkeit. Zudem können diese Formrohlinge F auch problemlos mit Wasser in Berührung kommen. Weiters können Formrohlinge F mit relativ großen Wanddicken (bis zu 40 mm) erzeugt werden, da auch bei diesen Wanddicken der Binder B noch gut entweichen kann. Weiters ist bei nachfolgenden Bearbeitungsschritten ein geringerer Schwund als bei anderen Herstellungsverfahren gegeben.

Deshalb wird Schutz begehrt für einen Formrohling F, der in einem erfindungsgemäßen Verfahren hergestellt wurde.

An das Herstellungsverfahren des Formrohlings F gemäß der Verfahrensschritte a bis j schließt - bevorzugt direkt beim Kunden oder aber auch beim Formrohlinghersteller möglich - die Herstellung eines Zahnersatzes Z gemäß der Verfahrensschritt k und I an. Demgemäß kann aus dem Formrohling F individuell durch eine CNC-Maschine bzw. durch eine CAD/CAM-Fräsvorrichtung ein dentales Werkstück (Zahnersatz Z) herausgearbeitet werden. Zum Abschluss wird dann dieser Zahnersatz Z im Verfahrensschritt I nochmals in einen Sinterofen 9 gegeben und dort, vorzugsweise sauerstofffrei, end- bzw. dichtgesintert, wodurch der Zahnersatz Z die endgültige Dichte und Festigkeit erhält.

Entsprechend wird auch Schutz für die Verwendung eines in einem erfindungsgemäßen Verfahren hergestellten Formrohlings F zur Herstellung eines Zahnersatzes Z begehrt.

Natürlich müssen nicht alle Verfahrensschritte von a bis j zur Herstellung des Formrohlings F durchgeführt werden. Auch die Reihenfolge muss nicht wie in Fig. 1 dargelegt eingehalten werden. Wichtig ist aber vor allem, dass die Verfahrensschritte b, c, d und h durchgeführt werden, sodass die Entstehung des Formrohlings F ausgehend von den Ausgangsmaterialien Metallpulver M, Flüssigkeit W und Binder B über das Mischen der Ausgangsmischung A, die Verfestigung zum gelverfestigten Grünkörper G, die Trocknung zum getrockneten Grünkörper T bis hin zur Entbinderung und Vorsinterung zum Vorsinterkörper S gegeben ist.

## Patentansprüche

1. Verfahren zur Herstellung eines Formrohlings (F) aus Metallpulver (M) durch Gelcasting, wobei eine Ausgangsmischung (A) für das Gelcasting durch Vermengen des Metallpulvers (M) mit einer Flüssigkeit (W) und einem Binder (B) erzeugt wird, wobei eine Durchmischung der Ausgangsmischung (A) unter Vakuum durchgeführt wird, wobei die Ausgangsmischung (A) erwärmt wird, wodurch die Gelbildung in der Ausgangsmischung (A) einsetzt und die Ausgangsmischung (A) zu einem gelverfestigten Grünkörper (G) verfestigt wird, **dadurch gekennzeichnet, dass** die zu einem getrockneten Grünkörper (T) weiterverarbeitete Ausgangsmischung (A) in einem kalt-isostatischen Pressverfahren (CIP) verdichtet wird.

2. Verfahren nach Anspruch 1, **dadurch gekennzeichnet, dass** der Binder (B) mit der Flüssigkeit (W) zu einer Flüssigkeit-Binder-Mischung (WB) vermengt wird, bevor diese Flüssigkeit-Binder-Mischung (WB) mit dem Metallpulver (M) vermengt wird.

3. Verfahren nach Anspruch 1 oder 2, **dadurch gekennzeichnet, dass** der Binder (B) Zellulose, vorzugsweise Methylzellulose, enthält.

4. Verfahren nach einem der Ansprüche 1 bis 3, **dadurch gekennzeichnet, dass** die Durchmischung unter Vakuum in einer Vakuumkammer (3) durchgeführt wird, wobei in der Vakuumkammer (3) ein Unterdruck, vorzugsweise zwischen 25 und 40 Millibar, herrscht.

5. Verfahren nach einem der Ansprüche 1 bis 4, **dadurch gekennzeichnet, dass** die unter Vakuum durchmischte Ausgangsmischung (A), vorzugsweise unter Vakuum, in eine Form (2) gegossen wird.

6. Verfahren nach einem der Ansprüche 1 bis 5, **dadurch gekennzeichnet, dass** der, vorzugsweise in einer geöffneten Form (2) befindliche, gelverfestigte Grünkörper (G) in einem Trockenschrank (5) für 10 bis 20 Stunden bei einer Temperatur zwischen 50° C und 95° C zum getrockneten Grünkörper (T) getrocknet wird.

7. Verfahren nach einem der Ansprüche 1 bis 6, **dadurch gekennzeichnet, dass** das kalt-isostatische Pressverfahren (CIP) des in einer wasserdichten Verpackung (7) angeordneten, getrockneten Grünkörpers (T) in einem mit Flüssigkeit (12) gefüllten Druckkessel (8) bei einem Druck von mindestens 1000 bar, vorzugsweise bei 2000 bis 5000 bar, für mindestens 10 Sekunden, vorzugsweise für 20 bis 40 Sekunden, durchgeführt wird.

## Claims

1. A method for producing a molded blank (F) from metal powder (M) using a gel-casting process, wherein a starting mixture (A) for the gel-casting process is made by mixing the metal powder (M) with a liquid (W) and a binder (B), wherein the starting mixture (A) is thoroughly mixed in a vacuum, wherein the starting mixture (A) is warmed, whereby the gelation starts in the starting mixture (A) and the starting mixture (A) is solidified to a gel-solidified green body (G), **characterized in that** starting mixture (A) which is further processed to a dried green body (T) is compressed in a cold-isostatic pressing process (CIP).

2. The method according to claim 1, **characterized in that** the binder (B) is blended with the liquid (W) to a liquid-binder mixture (WB) before this liquid-binder mixture (WB) is blended with the metal powder (M).

3. The method according to claim 1 or 2, **characterized in that** the binder (B) contains cellulose, preferably methyl cellulose.

4. The method according to one of the claims 1 through 3, **characterized in that** the thoroughly mixing in a vacuum is effected in a vacuum chamber (3), wherein a low pressure, preferably between 25 and 40 millibar, prevails in the vacuum chamber (3).

5. The method according to one of the claims 1 through 4, **characterized in that** the starting mixture (A) thoroughly mixed in a vacuum is poured, preferably in a vacuum, into a mold (2).

6. The method according to one of the claims 1 to 5, **characterized in that** the gel-solidified green body (G), preferably located in an opened mold (2), is dried to a dried green body (T) in a drying cabinet (5) for 10 to 20 hours at a temperature between 50° C and 95° C.

7. The method according to one of the claims 1 to 6, **characterized in that** the cold isostatic pressing process (CIP) of the dried green body (T) arranged in a watertight packaging is carried out in pressure vessel (8) filled with a liquid (12) at a pressure of at least 1000 bar, preferably at 2000 to 5000 bar, for at least 10 seconds, preferably for 20 to 40 seconds.

## Revendications

1. Procédé de fabrication d'une ébauche moulée (F) en poudre de métal (M) par moulage de gel, dans lequel un mélange de départ (A) pour le moulage de gel est produit par mélange de la poudre de métal (M) à un liquide (W) et un liant (B), dans lequel un mélange du mélange de départ (A) est réalisé sous vide, dans lequel le mélange de départ (A) est chauffé, par lequel la gélification commence dans le mélange de départ (A) et le mélange de départ (A) est durci en un corps vert solidifié par le gel (G), **caractérisé en ce que** le mélange de départ (A) transformé en un corps vert sec (T) est compacté dans un procédé de moulage par compression isostatique à froid (CIP).

2. Procédé selon la revendication 1, **caractérisé en ce que** le liant (B) est mélangé avec le liquide (W) en un mélange liant-liquide (WB), avant que ce mélange liant-liquide (WB) soit mélangé avec la poudre de métal (M).

3. Procédé selon la revendication 1 ou 2, **caractérisé en ce que** le liant (B) contient de la cellulose, de préférence de la cellulose de méthyle.

4. Procédé selon l'une des revendications 1 à 3, **caractérisé en ce que** le mélange est réalisé sous vide dans une chambre à vide (3), dans lequel une dépression, de préférence entre 25 et 40 millibars, règne dans la chambre à vide (3).

5. Procédé selon l'une des revendications 1 à 4, **caractérisé en ce que** le mélange de départ (A) mélangé sous vide, est versé de préférence sous vide dans un moule (2).

6. Procédé selon l'une des revendications 1 à 5, **caractérisé en ce que** le corps vert (G) solidifié par le gel, se trouvant de préférence dans un moule ouvert (2), est séché dans une étuve (5) pendant 10 à 20 heures à une température située entre 50° C et 95° C en un corps vert sec (T).

7. Procédé selon l'une des revendications 1 à 6, **caractérisé en ce que** le procédé de moulage par compression isostatique à froid (CIP) du corps vert sec (T), disposé dans un emballage étanche (7), est réalisé dans un autoclave (8) rempli de liquide (12) à une pression d'au moins 1000 bars, de préférence de 2000 à 5000 bars, pendant au moins 10 secondes, de préférence pendant 20 à 40 secondes.
